# EUROPEAN PATENT APPLICATION

(11) **EP 2 119 524 A1**
(43) Date of publication of application: **18.11.2009**
(21) Application number: 08425343.4
(22) Date of filing: 15.05.2008
(51) Int. Cl.: B23H 5/10, B24D 5/02

(54) **Bimetal electrode for erosion grinders and manufacturing method**

(71) Applicant: Celsia S.P.A., 28877 Anzola D'Ossola (VB) (IT)
(72) Inventor: De Col, Eugenio, 28877 Verbania (IT); Rasi, Giuseppe, 28887 Omegna (IT)
(74) Representative: Petruzziello, Aldo

(57) **Abstract**

A bimetal electrode (1) for erosion grinders is disclosed, in particular for erosion grinders for producing synthetic polycrystalline diamond (PCD) or hard metal tools, comprising a consumable portion (2), preferably made of tungsten-copper alloy, joined to a metal supporting disc (3) preferably made of copper, of iron, of brass, of aluminium or of other metal that is a good conductor of electricity.

The metal supporting disc (3) advantageously comprises means for electrically and mechanically coupling it to the erosion grinder.

A method for producing the above mentioned bimetal electrode (1) by welding the consumable portion (2) to the supporting disc (3) by heating in a controlled atmosphere furnace until the supporting disc (3) and the consumable portion (2) melt at least partially and by subsequently cooling to the room temperature is also disclosed.

Alternatively, the bimetal electrode (1) can be produced by welding the consumable portion (2) to the supporting disc (3) by means of welding, of hot pressing and/or of mechanical joining.

## Description

The present invention refers to a bimetal electrode for erosion grinders, particularly for erosion grinders for making synthetic polycrystalline diamond (PCD) or hard metal tools, and to a method for manufacturing such a bimetal electrode.

The erosion grinders used to produce synthetic PCD or hard metal tools are similar to those widely used for the construction of moulds.

The electrodes currently in use consist of discs or of grinding wheels of various shapes and sizes, made of a tungsten copper (W-Cu) alloy comprising 70-80% tungsten.

Because of the high percentage of tungsten, the electrodes of the prior art have an excellent resistance to the electric arc and to the wear, qualities that are fundamental for the erosion processing, and they are made by pressing and sintering metal powders containing tungsten and copper in the required proportions.

The electrode thus obtained is a single block of tungsten-copper alloy and is very costly, above all because of the high cost of the tungsten powder.

Means (not described herein because they are per se known) must be formed or inserted in the electrode to couple it electrically and mechanically to the erosion grinder.

The presence of said coupling means makes it necessary to replace the electrode before it is entirely consumed.

The disposal of the portion of electrode to be scrapped is costly both because of the intrinsic value of the tungsten-copper alloy of which it is made and because a tungsten-copper alloy product is considered a special industrial waste and as such must (or should) be disposed of separately from other scraps of metal material.

Object of the present invention is to produce an electrode for erosion grinders that is free from the drawbacks and the limitations shown by the electrodes of the prior art; this object is achieved in accordance with the invention with an electrode having the characteristics listed in appended independent claim 1 and produced according to the method described in appended independent claim 7.

Further advantageous characteristics of the invention are apparent from the dependent claims.

The invention will now be described with reference to purely exemplifying (and therefore non limiting) embodiments illustrated in the appended figures, wherein:
- Figure 1 shows schematically, in section, some disc electrodes produced according to the invention;
- Figure 2 shows schematically, in section, some examples of cylindrical cup electrodes made according to the invention;
- Figure 3 shows schematically, in section, some examples of frusto-conical cup electrodes made according to the invention;
- Figure 4 shows very schematically, in section, some examples of dies that can be used to produce disc electrodes (Figure 4a), cylindrical cup electrodes (Figure 4b) or frusto-conical cup electrodes (Figure 4c).

In the appended figures, corresponding elements will be designated by the same reference numerals.

A bimetal electrode for erosion grinders that comprises a consumable portion, preferably made of tungsten-copper alloy, welded to a metal supporting disc (preferably made of copper) that advantageously comprises means to couple it electrically and mechanically to the erosion grinder forms the subject matter of the present invention.

A method for welding the metal supporting disc to the consumable portion also forms the subject matter of the present invention.

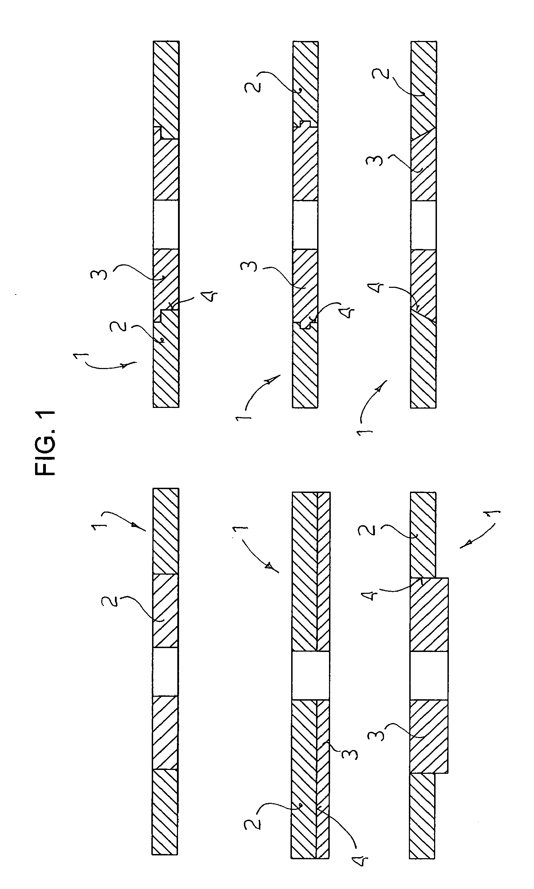

Figures 1 to 3 show schematically, in section, some examples of bimetal disc and cup electrodes, respectively, made according to the invention.

With reference to Figure 1, which shows schematically, in section, some examples of bimetal disc electrodes 1 made according to the invention, it can be seen that the bimetal electrode 1 comprises a consumable portion 2 welded to a metal supporting disc 3.

The consumable portion 2 consists of a disc (or of a circular crown) preferably made of tungsten-copper alloy, whereas the metal supporting disc 3 is preferably made of copper and comprises the means (per se known and omitted in the appended figures for the sake of simplicity of the graphic representation) to electrically and mechanically couple the supporting disc 3 and, consequently, the bimetal electrode 1, to the erosion grinder.

Without departing from the scope of the invention, the metal supporting disc 3 can also be made of iron, of brass, of aluminium and/or of any other metal material that is a good conductor of electricity.

Figure 1 shows, purely by way of non-limiting example, some of the possible shapes of the consumable portion 2, of the metal supporting disc 3 and of the interface surfaces 4 along which the consumable portion 2 is welded to the metal supporting disc 3, preferably through the method that will be described hereunder.

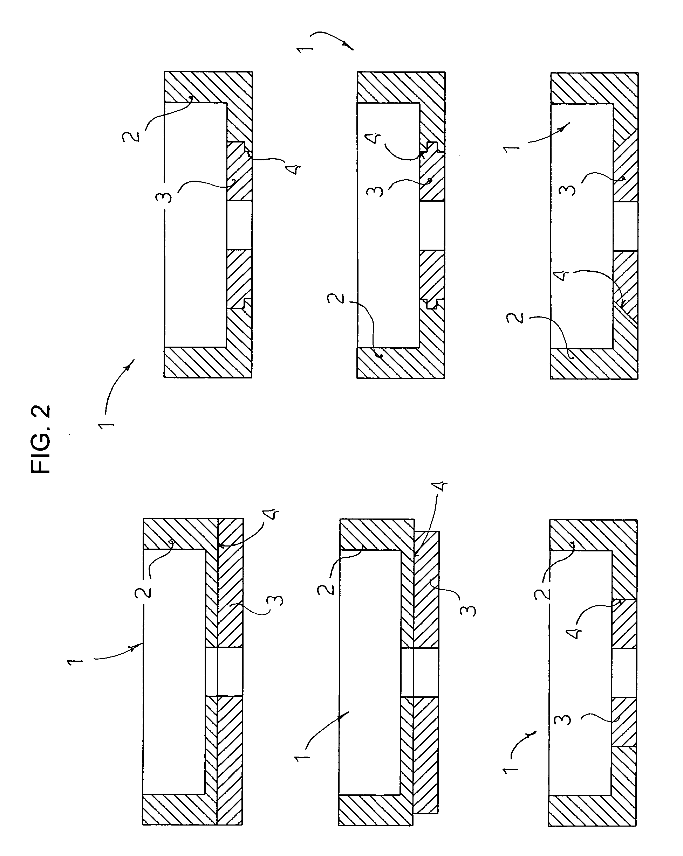

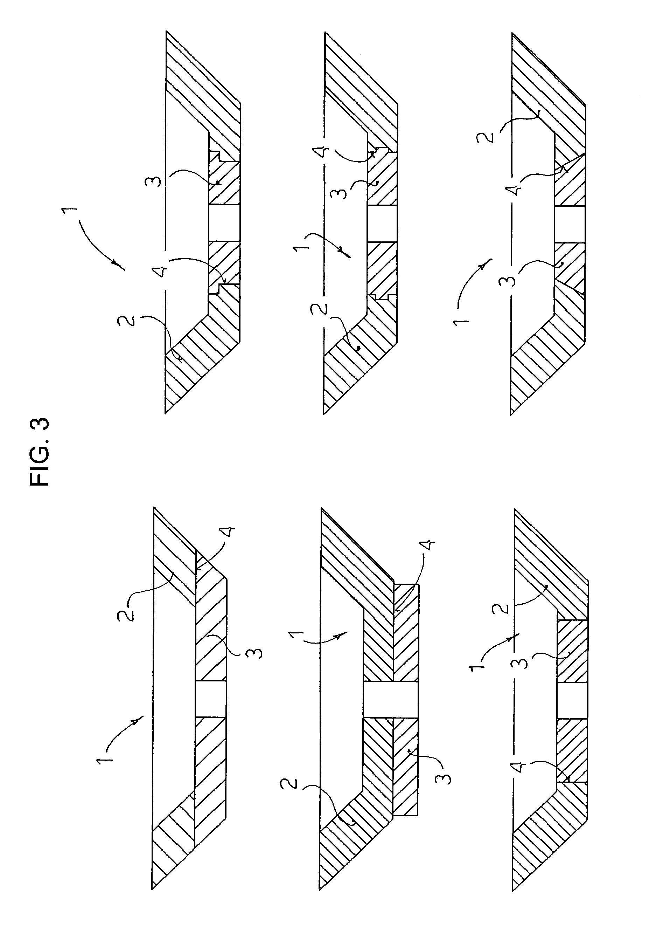

Figures 2 and 3 show schematically, in section, some examples of cup electrodes 1 made according to the invention, which differ from the disc electrodes 1 of Figure 1 essentially in the shape of the consumable portion 2, having the shape of a cylindrical cup in the electrodes 1 shown in Figure 2 and of a frusto-conical cup in the electrodes 1 shown in Figure 3.

In Figures 2 and 3, the shapes of the interface surface 4 between the consumable portion 2 and the metal supporting disc 3 do not differ substantially from those shown in Figure 1.

The electrodes 1 made according to the invention, though retaining unchanged their quality and efficiency, allow a drastic reduction both in the cost of the electrode 1 (the supporting disc 3, which is not used in the erosion grinding process, is made of a less costly material than the tungsten-copper alloy) and in the disposal costs since the portion of the electrode 1 to be scrapped practically consists (or can consist) only of the supporting disc 3, which does not need to be disposed of separately from other metal scraps and can easily be recycled.

A method for producing the above mentioned bimetal electrode 1 by welding the consumable portion 2 to the supporting disc 3 by heating in a controlled atmosphere until the consumable portion 2 and the supporting disc 3 melt at least partially and by subsequently cooling to the room temperature the bimetal electrode 1 thus obtained also forms the subject matter of the present invention.

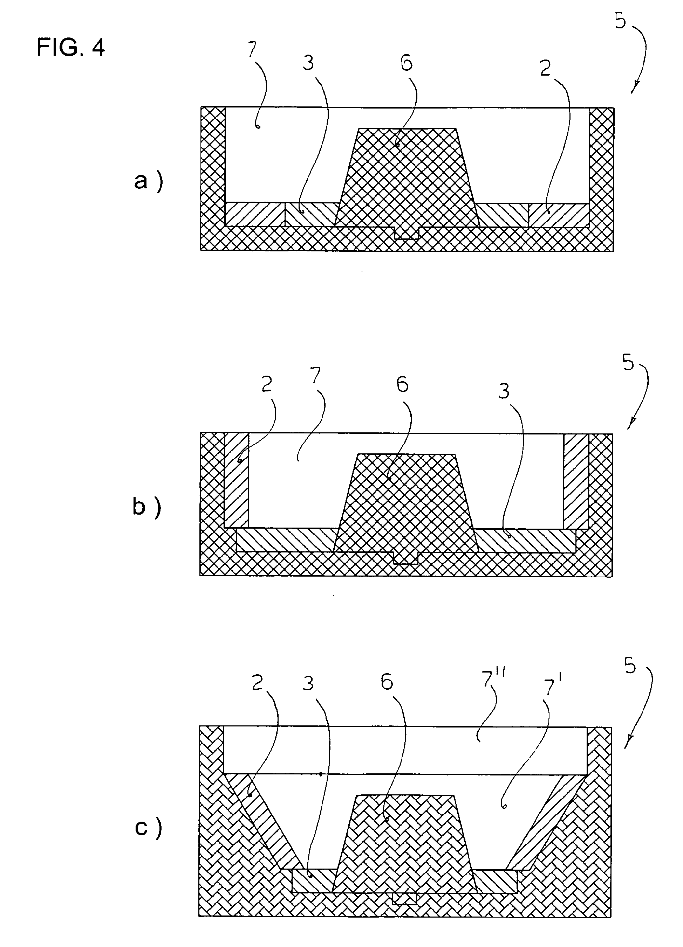

The method according to the present invention comprises at least the functional steps of:
- making the consumable portion 2;
- inserting the supporting disc 3 into a die 5 (Figure 4) bearing a removable inner core 6;
- inserting the consumable portion 2 into the die 5 and closing the die 5 with a matching die (7; 7'; 7"; Figure 4);
- placing the die 5 in a furnace and heating it in a controlled atmosphere until the supporting disc 3 and the copper present in the consumable portion 2 melt at least partially;
- gradually cooling the die 5 to the room temperature, opening it, removing the core 6 and extracting the bimetal electrode 1.

In the embodiments illustrated by way of non limiting example in the appended figures, the supporting disc 3 has a central hole and the die 5 comprises the removable core 6 but, without departing from the scope of the invention, to meet user's specific requirements the supporting disc 3 may not have the central hole and the die 5 can therefore be without the removable core 6.

The supporting disc 3 is preferably made of copper (or of other metal material with a low melting point) and is advantageously placed in the mould 5 by inserting therein pieces of the metal material of which it consists: during the subsequent heating in the furnace, said material melts occupying the space intended, in the die 5, for the supporting disc 3 and at the same time welding itself to the consumable portion 2.

If the supporting disc 3 is made of a material (for example, iron) having a high melting point, it is advantageous to make the supporting disc 3 separately and insert it into the die before inserting therein the consumable portion 2.

Figure 4 shows very schematically, in section, some examples of dies 5 that can be used to produce disc electrodes (Figure 4a), cylindrical cup electrodes (Figure 4b) or frusto-conical cup electrodes (Figure 4c).

Visible inside the die 5 in these figures are the consumable portion 2, the metal supporting disc 3, the removable inner core 6 and the matching die, which may consist of a single piece 7 (Figures 4a and 4b) or of two superimposed pieces (7', 7"; Figure 4c).

The removable inner core 6 allows the central hole in the supporting disc 3 to be formed if said disc is obtained by melting concomitantly with the welding thereof to the consumable portion 2 and it has proved useful even if the supporting disc 3 is made separately to keep the disc 3 in place during the welding thereof to the consumable portion 2.

To respond to specific requirements of the client, the shape and the size of the electrode 1 and the shape of the die 5 may be different from those shown purely by way of non limiting example in Figures 1 to 3 and in Figure 4, respectively.

Lastly, without departing from the scope of the invention, the consumable portion 2 can be fixed to the supporting disc 3 by welding, by hot pressing, by mechanical joining and/or by another fixing method, not described herein because it is per se known.

## Claims

1. An electrode (1) for erosion grinders, particularly for erosion grinders for producing polycrystalline diamond (PCD) or hard metal tools, **characterised in that** it is a bimetal electrode comprising a consumable portion (2) welded to a metal supporting disc (3).

2. An electrode (1) as in claim 1, **characterised in that** the consumable portion (2) is made of tungsten-copper alloy.

3. An electrode (1) as in claim 1, **characterised in that** the metal supporting disc (3) is made of copper.

4. An electrode (1) as in claim 1, **characterised in that** the metal supporting disc (3) is made of iron, of brass or of aluminium.

5. An electrode (1) according to claim 1, **characterised in that** the metal supporting disc (3) comprises means for electrically and mechanically coupling it to the erosion grinder.

6. An electrode (1) as in claim 1, **characterised in that** the metal supporting disc (3) has a central hole.

7. A method for producing a bimetal electrode (1) according to at least one of the preceding claims, by welding the consumable portion (2) to the supporting disc (3) by heating in a controlled atmosphere until the consumable portion (2) and the supporting disc (3) melt at least partially and by subsequently cooling to the room temperature the bimetal electrode (1) thus obtained.

8. A method as in claim 7, **characterised in that** it comprises at least the functional steps of:
- making the consumable portion (2);
- inserting the supporting disc (3) into a die (5);
- inserting the consumable portion (2) into the die (5) and closing the die (5) with a matching die (7; 7'; 7");
- placing the die (5) in a furnace and heating it in a controlled atmosphere until the supporting disc (3) and the metal forming the consumable portion (2) melt at least partially;
- gradually cooling the die (5) to the room temperature, opening it and extracting the bimetal electrode.

9. A method as in claims 6 and 8, **characterised in that** the die (5) bears a removable inner core (6) and **in that** said removable inner core (6) is removed after the die (5) has been opened and before the bimetal electrode (1) is extracted.

10. A method as in claim 8, **characterised in that** the supporting disc (3), made of a metal material with a low melting point, is placed in the die (5) by inserting therein pieces of the metal material making up the disc (3) and **in that**, during the subsequent heating in the furnace, said material melts, occupying the space in the die (5) intended for the supporting disc (3) and at the same time welding itself to the consumable portion (2).

11. A method as in claim 8, **characterised in that** the supporting disc (3) made of a metal material with a high melting point, is made separately and is placed in the die (5) before inserting therein the consumable portion (2).

12. A method for producing a bimetal electrode (1) according to at least one of claims 1 to 6, by welding the consumable portion (2) to the supporting disc (3) by welding, by hot pressing and/or by mechanical joining.
